# EUROPEAN PATENT APPLICATION

(11) **EP 4 176 774 A1**
(43) Date of publication of application: **10.05.2023**
(21) Application number: 22020539.7
(22) Date of filing: 08.11.2022
(51) Int. Cl.: A47G 7/03, A01G 5/04, B65D 6/16, B65D 85/50, A47G 7/04

(54) **FLORAL CAGE DEVICE AND SYSTEM**

(30) Priority: 09.11.2021 US 202163263764 P; 07.11.2022 US 202217981745
(71) Applicant: Floracraft Corp., Ludington, Michigan 49431 (US)
(72) Inventor: Dally, Tyler, Ludington, MI 49431 (US); Richardson, Dondi, Ludington, MI 49431 (US); Olson, Amy Steidl, Ludington, MI 49431 (US); Erwin, Eric, Ludington, MI 49431 (US); Kincaid, Brett, Ludington, MI 49431 (US)
(74) Representative: Matyka, Malgorzata

(57) **Abstract**

A floral cage (10) includes a bottom panel (10A) ; a top panel (10B) ; and a plurality of side panels (10C) . The side panels (10C) vertical extending between the bottom panel (10A) and the top panel (10B) . Each side panel (10C) is formed to include cooperating structures for coupling with corresponding features of a similarly constructed further floral cage (10) . The floral cage (10) is selectively configurable in an unassembled condition and an assembled condition. The floral cage (10) is planar in configuration in the unassembled condition. The plurality of side panels (10C) are folded perpendicular to the bottom panel (10A) and the top panel (10B in the assembled condition and the floral cage (10) is rectangular in configuration in the assembled condition and defines a rectangular opening for receiving a foam block (12) .

## Description

### FIELD

The present disclosure generally relates to the display of flowers. More particularly, the present disclosure relates to a floral cage that can be used for the display of flowers.

### BACKGROUND

This section provides background information related to the present disclosure which is not necessarily prior art.

Various structures are known for the display of flowers. For example, it is generally known to provide a container that contains a foam block. Such containers are often referred to as floral cages. The foam block conventionally holds water and receives the stems of flowers and related plants for display. While known floral cages may generally serve their intended purposes, all are associated with disadvantages. As such, a need for continued improvement in the art remains.

### SUMMARY

This section provides a general summary of the disclosure and is not a comprehensive disclosure of its full scope or all of its features.

It is a general object of the present teachings to provide a floral cage that can cooperate with other, similar floral cages to create an arrangement for the display of flowers.

It is a related object of the present teachings to provide a floral cages that can be connected with one or more similar floral cages with fins extending from the floral cages.

It is another general object of the present teachings to provide a floral cage bracket for holding two floral cages and providing a handle for the cages to be suspended from an easel or the like.

In accordance with one aspect, the present teachings provide a floral cage including a bottom panel, a top panel, and a plurality of side panels. The side panels vertically extend between the bottom panel and the top panel. Each side panel formed to include a plurality of horizontally extending fins and a plurality of slots configured and arranged for coupling of the floral cage with a similarly constructed further floral cage.

In accordance with another aspect, the present teachings provide a floral cage includes a bottom panel; a top panel; and a plurality of side panels. The side panels vertical extending between the bottom panel and the top panel, each side panel is formed to include cooperating structures for coupling with corresponding features of a similarly constructed further floral cage. The floral cage is selectively configurable in an unassembled condition and an assembled condition, the floral cage planar in configuration in the unassembled condition, the plurality of side panels folded perpendicular to the bottom panel and the top panel in the assembled condition and the floral cage rectangular in configuration in the assembled condition and defining a rectangular opening for receiving a foam block.

In accordance with yet another aspect, the present teachings provide floral cage assembly including a first floral cage, a second floral cage, and a floral cage bracket connecting the first and second floral cages. Both of the first and second floral cages are rectangular in shape and include a top panel, a bottom panel and a plurality of side panels. The floral cage bracket includes first and second side panels extending from a bottom panel, both of the first and second side panels including a first portion coupling with the first floral cage and a second portion coupling with the second floral cage.

Further areas of applicability will become apparent from the description provided herein. The description and specific examples in this summary are intended for purposes of illustration only and are not intended to limit the scope of the present disclosure.

### DRAWINGS

The drawings described herein are for illustrative purposes only of selected embodiments and not all possible implementations, and are not intended to limit the scope of the present disclosure.
Figure 1 is a perspective view of a floral cage constructed in accordance with the present teachings, the floral cage shown in an assembled condition.
Figure 2 is a front view of the floral cage of Figure 1.
Figure 3 is a rear view of the floral cage of Figure 1.
Figure 4 is a left side of the floral cage of Figure 1.
Figure 5 is a right side view of the floral cage of Figure 1.
Figure 6 is a top side view of the floral cage of Figure 1.
Figure 7 is a bottom view of the floral cage of Figure 1.
Figure 8 is a perspective view of the floral cage of Figure 1 shown in an unassembled condition.
Figure 9 is a perspective view similar to Figure 1, further illustrated with a foam block in the floral cage.
Figure 10 is a top view of a floral cage bracket in accordance with the present teachings, the floral cage bracket shown in an unassembled or flat condition.
Figure 11 is a perspective view of the floral cage bracket of Figure 10, the floral cage bracket shown folded and ready to receive first and second floral cages.
Figure 12 is an assembly view illustrating first and second floral cages connected with the floral cage bracket of Figures 10 and 11.
Figure 13 is an assembly view similar to Figure 12, illustrated with foam blocks within the first and second floral cages.

### DETAILED DESCRIPTION

Example embodiments will now be described more fully with reference to the accompanying drawings.

Example embodiments are provided so that this disclosure will be thorough and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that the example embodiment should not be construed to limit the scope of the present disclosure. Well-known processes, well-known device structures, and well-known technologies are not described herein in detail.

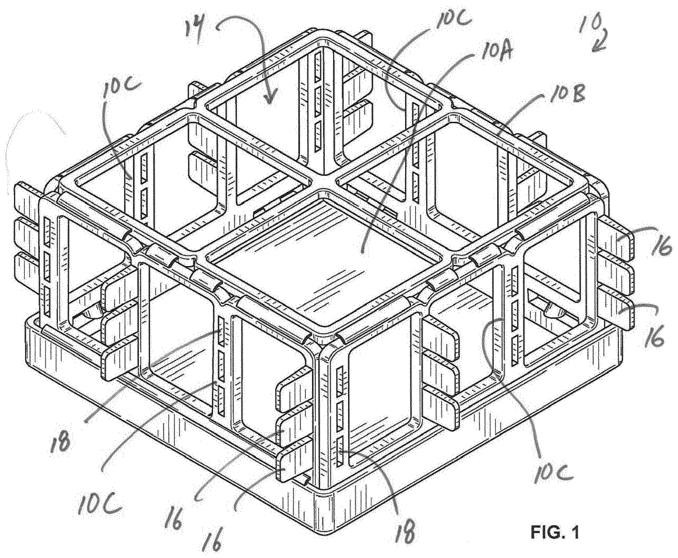

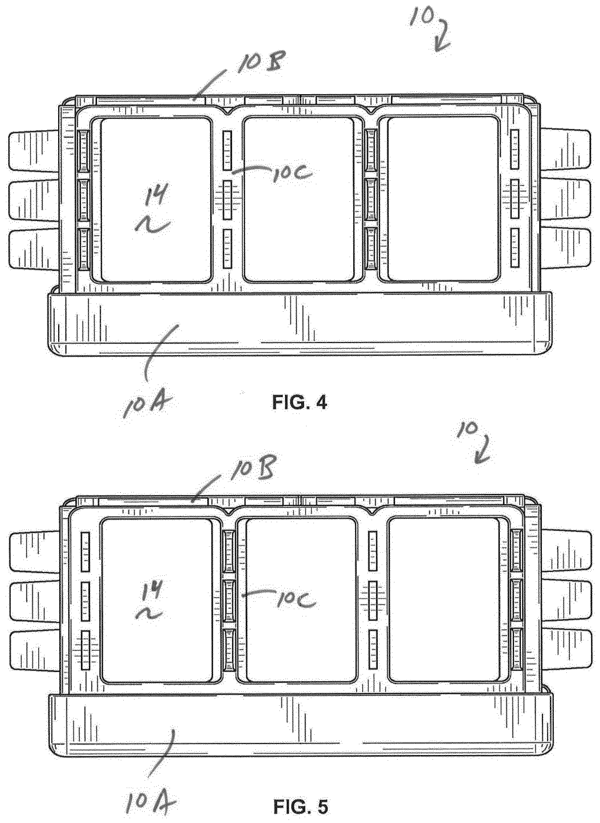

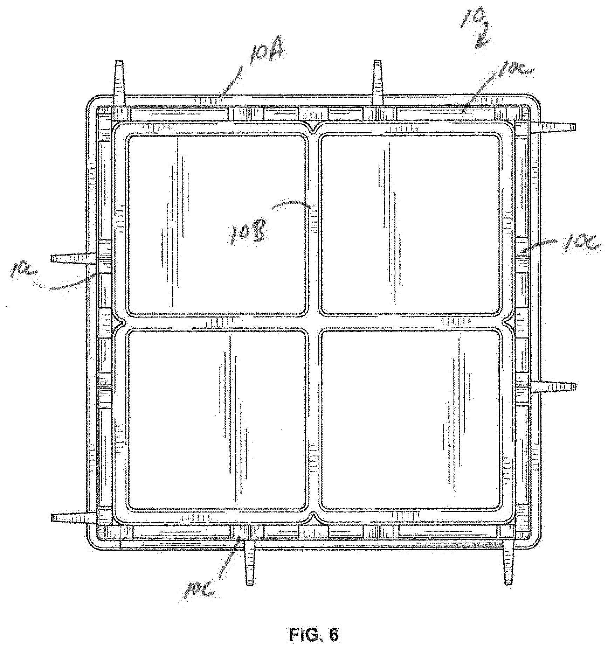

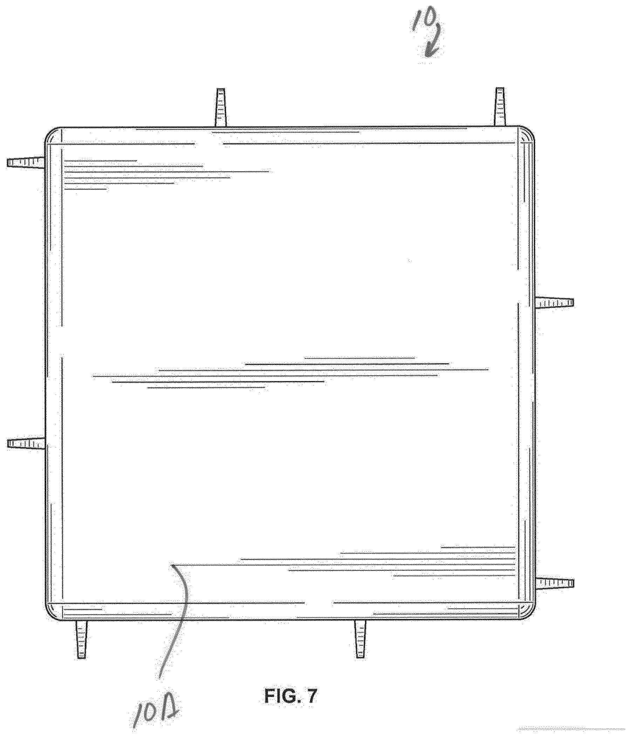

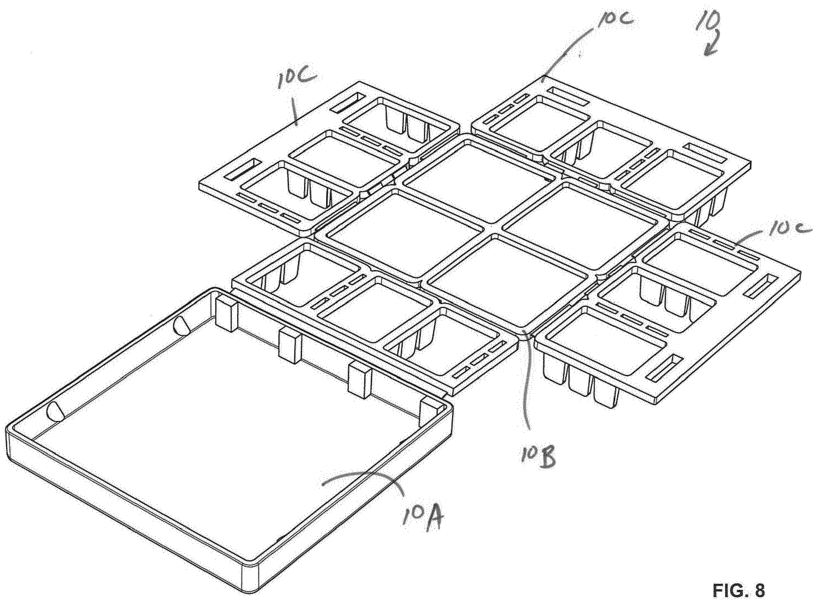

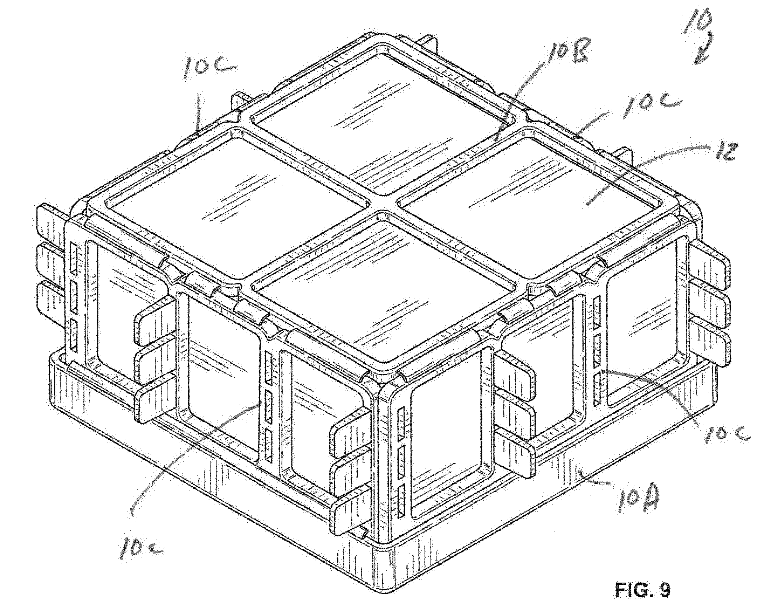

With initial reference to Figures 1-9, a floral cage constructed in accordance with the teachings of the present invention is illustrated and generally identified at reference character 10. In Figures 1-7, the floral cage 10 is shown in an assembled or folded condition for receiving a foam block 12. In Figure 8, the floral cage 10 is shown in an unassembled or unfolded condition. In Figure 9, the floral cage 10 is shown operatively associated with the foam block 12. It will be understood that the foam block 12 is conventional in construction insofar as the present teachings are concerned. Various known foam blocks may be used within the scope of the present teachings.

The floral cage 10 may be unitarily constructed of plastic or other suitable material. For example, the floral cage 10 may be injection molded of plastic. The floral cage 10 may be manufactured in the generally flat condition or unassembled condition shown in Figure 8. In this condition, the floral cage 10 is shown to include a bottom panel 10A, a top panel 10B, and four side panels 10C. The bottom panel 10A may be a solid panel defining a pan. The floral cage 10 may be formed such that one of the side panels 10C directly connects the bottom panel 10A and the top panel 10B. The other three (3) side panels 10C may depend directly from the top panel 10B, for example. Upon folding or assembly, the side panels 10C (e.g., plurality of side panels) vertically extend between the bottom panel 10A and the top panel 10B. The top panel 10B, bottom panel 10A and side panels 10C cooperate to define a rectangular structure having a correspondingly shaped, rectangular hollow interior 14 for receiving the foam block 12 (as shown in Figure 9, for example).

Each of the top panel 10B and the side panels 10C is formed to include one or more windows for providing access to the foam block 12. In this regard, the stems of flowers and related plants for display may be passed through these windows to anchor in the foam block 12. In the embodiment illustrated, each of the top panel 10B and the side panels 10C is formed to include a plurality of windows for providing access to the foam block 12.

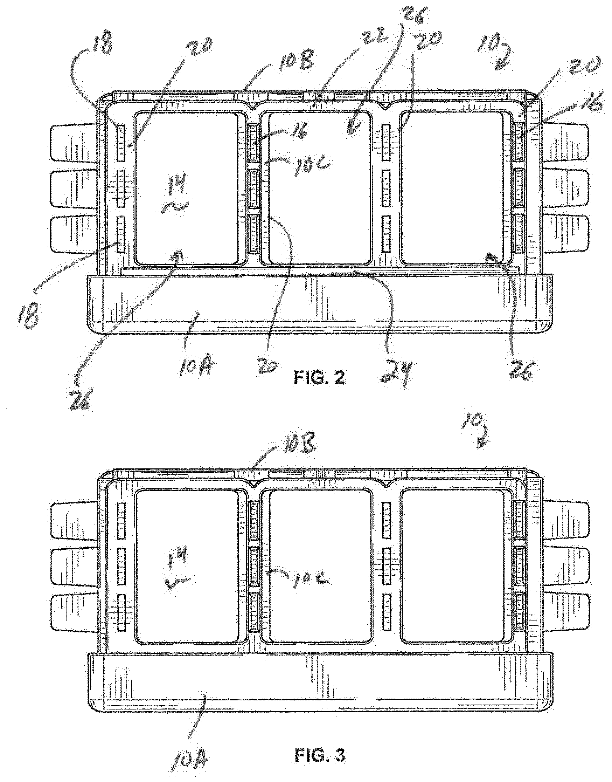

The floral cage 10 of the present teachings is particularly designed to couple to one or more similarly constructed floral cages 10. In this regard, each side panel 10C may be formed to include cooperating structures for coupling to similar floral cages 10. In this regard, each side panel 10C may be formed to include at least one male structure and at least one female structure. In the embodiment illustrated, each side panel 10C is shown to include a plurality of one male structures and a plurality of female structures. The male structures may be a plurality of horizontally projecting fins 16 and the female structures may be a plurality of slots 18. As shown in the side view of Figure 2, for example, each side panel 10C includes a plurality of vertically extending webs 20. The vertically extending webs 20 connect a top side 22 and a bottom side 24. Windows 26 are defined between adjacent webs 20. In the embodiment illustrated, each side panel 10C includes four webs 20. It will be understood, however, that a greater or lesser number of webs 20 may be included within the scope of the present teachings. The web 20 adjacent a first side (e.g., on the right as shown in Figure 2), may include fins 16. The adjacent web may include slots 18. The pattern continues to alternate such that the web 20 at the second side (e.g., on the right as shown in Figure 2) includes slots 18. As illustrated, the webs 20 including fins 16 include one or more fins 16, and preferably a plurality of fins 16. Similarly, the webs 20 include slots 18 include one or more slots 18, and preferably a plurality of slots 18. As such, when similar floral cages 10 are arranged adjacent to one another, the fins 16 align with the slots 18.

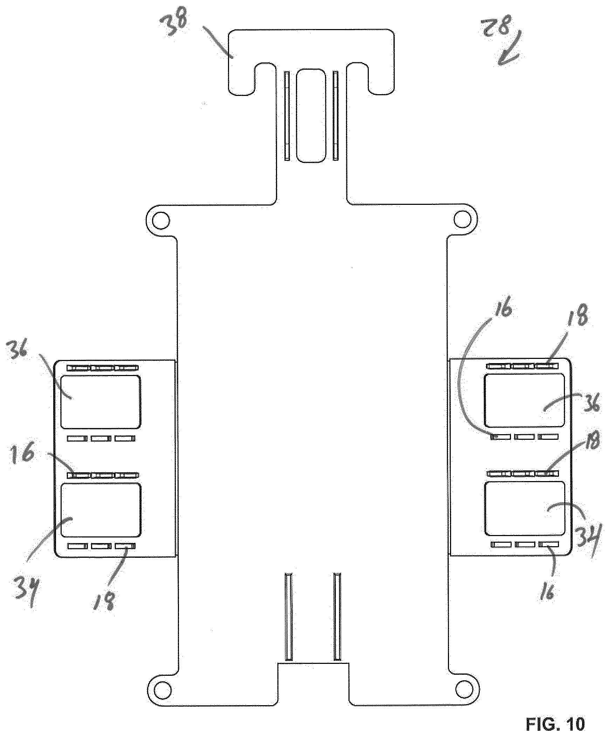

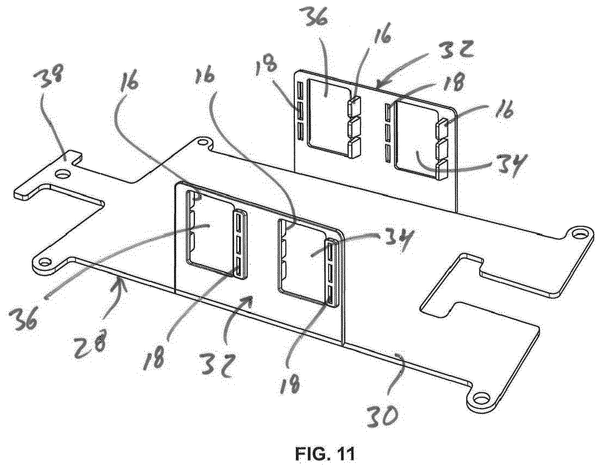

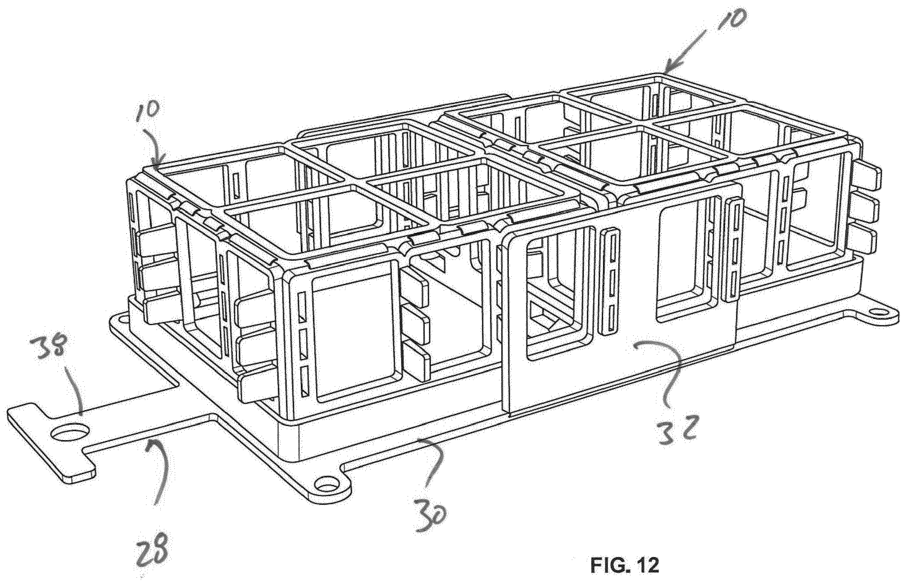

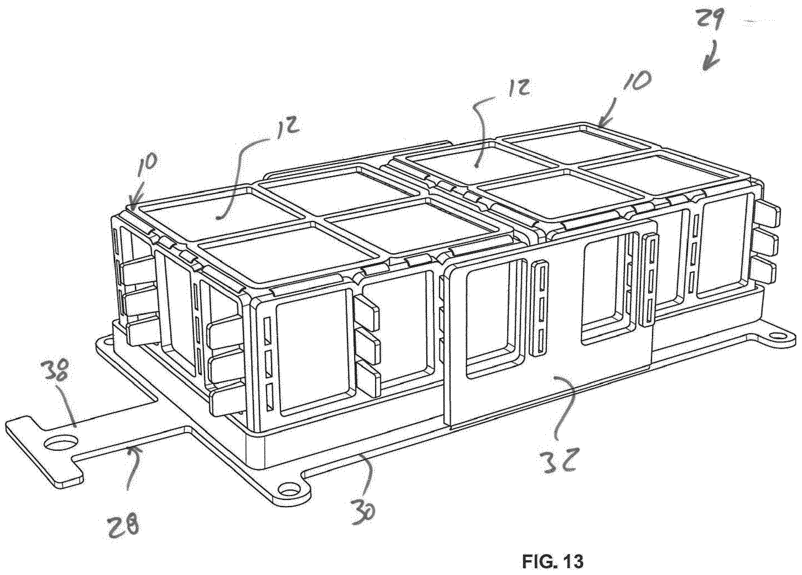

Turning to Figures 10-13, a floral cage bracket 28 in accordance with the present teachings is illustrated. The floral cage bracket 28 is adapted to hold the floral cage 10 and a further floral cage 10 to create a floral cage assembly 29. In Figure 10, the floral cage bracket 28 is shown in a flat or unassembled condition. In Figure 11, the floral cage bracket 28 is folded to a use or assembled condition. In Figure 12, the floral cage bracket 28 is operatively shown with a pair of floral cages 10. In Figure 13, the floral cages 10 of Figure 12 are shown loaded with foam blocks 12. As with the floral cage 10, the floral cage bracket 28 may be unitarily formed of plastic or other suitable material.

The floral cage bracket 28 may include a bottom panel 30 and first and second side panels 32. The side panels 32 may be folded from the unassembled condition of Figure 10 to the assembled condition of Figure 11. The side panels 32 of the floral cage bracket 28 are each adapted to cooperate with two floral cages 10. In this regard, each side panel 32 includes a first plurality of fins 16 and a first plurality of slots 18 arranged and sized to cooperate with corresponding slots 18 and fins 16 of a first floral cage, and a second plurality of fins 16 and a second plurality of slots 18 arranged and sized to cooperate with corresponding slots 18 and fins 16 of a second floral cage 10. Each side panel 32 defines a first window 34 arranged to align with a window of the first floral cage 10 and a second window 36 arranged to align with a window of the second floral cage 10.

The floral cage bracket 28 may include a handle 38 extending from the lower panel 30 and in the same plane as the lower panel. The handle 38 may be used for hanging a floral cage assembly 29.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. A floral cage 10 comprising:
a bottom panel 10A;
a top panel 10B; and
a plurality of side panels 10C vertically extending between the bottom panel 10A and the top panel 10B,
**characterized in that**
each side panel 10C is formed to include cooperating structures for coupling with corresponding features of a similarly constructed further floral cage 10, and
the floral cage 10 is selectively configurable in an unassembled condition and an assembled condition, the floral cage 10 being planar in configuration in the unassembled condition, the plurality of side panels 10C folded perpendicular to the bottom panel 10A and the top panel 10B in the assembled condition and the floral cage 10 being rectangular in configuration in the assembled condition and defining a rectangular opening for receiving a foam block 12.

2. The floral cage 10 according to claim 1, **characterized in that** the cooperating structures include at least one male structure and at least one female structure formed on each side panel 10C of the plurality of side panels.

3. The floral cage 10 according to claim 2, **characterized in that** at least one male structure formed on each of the plurality of side panels includes a plurality of fins 16 and the at least one female structure formed on each of the plurality of side panels includes a plurality of slots 18.

4. The floral cage 10 of claim 1, **characterized in that** a first side panel of the plurality of side panels 10C directly connects the bottom panel 10A and the top panel 10B.

5. The floral cage 10 of claim 4, **characterized in that** the plurality of side panels 10C further includes second, third and fourth side panels directly depending from the top panel 10B.

6. The floral cage 10 according to one of the preceding claims, **characterized in that** each side panel 10C of the plurality of side panels includes a plurality of vertically extending webs 20, the vertically extending webs 20 connecting a top side and a bottom side, and further wherein windows 26 are defined between adjacent webs 20.

7. The floral cage 10 according to claim 6, **characterized in that** a first vertically extending web 20 of each side panel 10C is adjacent a first side thereof and includes at least one fin 16 and a second vertically extending web 20 of each side panel adjacent to the first panel includes a plurality of slots 18.

8. The floral cage 10 according to one of the preceding claims, **further characterized by** a floral cage bracket 28 and the further floral cage 10, the floral cage bracket 28 holding the floral cage 10 and the further floral cage 10 and cooperating with the floral cage 10 and further floral cage 10 to define a floral cage assembly 29.

9. The floral cage assembly 29 according to claim 8, **characterized in that** at least one fin 16 of the floral cage 10 engages a corresponding slot 18 of the further floral cage 10 and at least one fin 16 of the further floral cage 10 engages a corresponding slot 18 of the floral cage 10.

10. The floral cage assembly 29 according to one of the preceding claims, **characterized in that** the fins of a plurality of fins 16 of the floral cage 10 engage corresponding slots 18 of the further floral cage 10 and the fins 16 of a plurality of fins of the further floral cage 10 engage corresponding slots 18 of the floral cage 10.

11. The floral cage assembly 29 according to one of claims 8 through 10, **characterized in that** the floral cage bracket 29 includes a bottom panel 30 and first and second side panels 32.

12. The floral cage assembly 29 of claim 11, **characterized in that** each side panel 32 of the floral cage bracket 28 includes a first plurality of fins 16 and a first plurality of slots 18 arranged and sized to cooperate with corresponding slots 18 and fins 16 of the floral cage 10, and a second plurality of fins 16 and a second plurality of slots 18 arranged and sized to cooperate with corresponding slots 18 and fins 16 of the further floral cage 10.

13. The floral cage assembly 29 according to one of the preceding claims, **characterized in that** each side panel 32 of the floral cage bracket 28 includes a first window 34 arranged to align with a first window 26 of the floral cage 10 and a second window 34 arranged to align with a second window 26 of the further floral cage 10.

14. The floral cage assembly 29 according to one of the preceding claims, **characterized in that** the floral cage bracket 28 further comprises a handle 38 for hanging the floral cage assembly 29.
